# EUROPEAN PATENT APPLICATION

(11) **EP 4 813 872 A1**
(43) Date of publication of application: **30.09.2026**
(21) Application number: 25166436.3
(22) Date of filing: 26.03.2025
(51) Int. Cl.: B65G 1/04, B65G 1/137

(54) **PORT CONTROL**

(71) Applicant: AutoStore Technology AS, 5578 Nedre Vats (NO)
(72) Inventor: MATRE, Dag Arne, 5578 Nedre Vats (NO); NOVAK, Samuel Matyas, 5578 Nedre Vats (NO)
(74) Representative: Kilburn & Strode LLP

(57) **Abstract**

The disclosure relates to a controller (502) configured to control movement of containers at a port (504) of an automated storage and retrieval system. The port comprises a first position (511), second position (512), and third position (513) for containers, and a conveyer (520) configured to move containers between the positions. The controller is configured to determine a first container (501) in the second position cannot be lifted by a container lift (524) and a second container (502) is in the first position, control the conveyer to move the first container to the third position and the second container to the second position, control the conveyer to move the first container to the first position for reconfiguration of the first container, control the conveyer to move the first container to the second position when reconfigured, and initiate delivery of the reconfigured first container from the port to a storage area (100) by the container lift.

## Description

### TECHNICAL FIELD

The disclosure relates to port control. More particularly, it relates to controlling movement of containers at a port of an automated storage and retrieval system, the port configured for accessing containers in the automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Robotic container-handling vehicles place the containers in the ports, and the ports are then controlled to present the containers to operators for items to be inserted to or removed from the containers. When these insertion and removal actions are complete, the ports are controlled to return to containers for collection by the robotic container-handling vehicles.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A shows a conceptual cross-sectional diagram of a port;
Fig. 5B shows a block diagram of the interaction between the port and a controller of the port;
Fig. 6 is a flow chart of the operation of the port;
Figs. 7A-7F show conceptual cross-sectional views of the port of Fig. 5A at stages corresponding to the steps of the flow chart of Fig. 6; and
Figs. 8A-8C are a flow chart of an error recovery process to recover a container that is stuck in the port;
Figs. 9A-9L show conceptual cross-sectional views of the port of Fig. 5A at stages corresponding to the steps of the flow chart of Figs. 8A-8C.

### DETAILED DESCRIPTION

In overview, the disclosure relates to controlling the movement of containers at a port in an automated storage and retrieval system.

The port has a first position, a second position and a third position.

The first position is a position in which a container is accessible by an operator for the insertion of objects into and/or the removal of objects from the container. The second position is below a shaft through which containers are delivered from a storage area in the automated storage and retrieval system to the port, and/or delivered from the port to the storage area, by a container lift. The third position is a position in which a container is temporarily stowed.

The port also has a conveyer that moves the containers between the positions.

In some instances, a container may become stuck in the second position because the container lift cannot lift the container for delivery from the port to the storage area. This could adversely affect storage and retrieval performance at the port.

To address such an issue, a controller of the port is configured to perform a recovery process.

When the controller determines a first container in the second position cannot be lifted by the container lift, and a second container is in the first position, the controller controls the conveyer to move the first container from the second position to the third position. The controller controls the conveyer to move the second container from the first position to the second position. The controller controls the conveyer to move the first container from the third position to the first position for reconfiguration of the first container, and controls the conveyer to move the first container from the first position to the second position when the first container has been reconfigured. The controller initiates delivery of the first container from the port to the storage area by the container lift when the first container is reconfigured and in the second position.

In this way, there is improved port throughput leading to improved storage and retrieval efficiency. Downtime of the port is reduced because stuck containers (i.e., containers that cannot be lifted by the container lift) can quickly be resolved. Moreover, the process does not require a human operator to enter the port, or insert a hand/arm into the port. This avoids injury and also saves time in rectifying the error.

### Automated storage and retrieval system overview

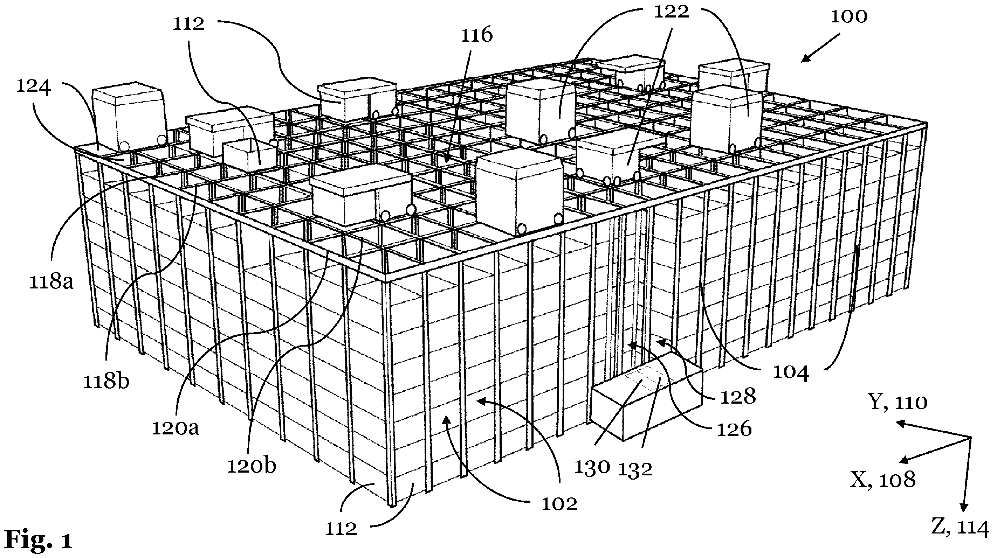

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles (interchangeably referred to as container-handling robotic vehicles), or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

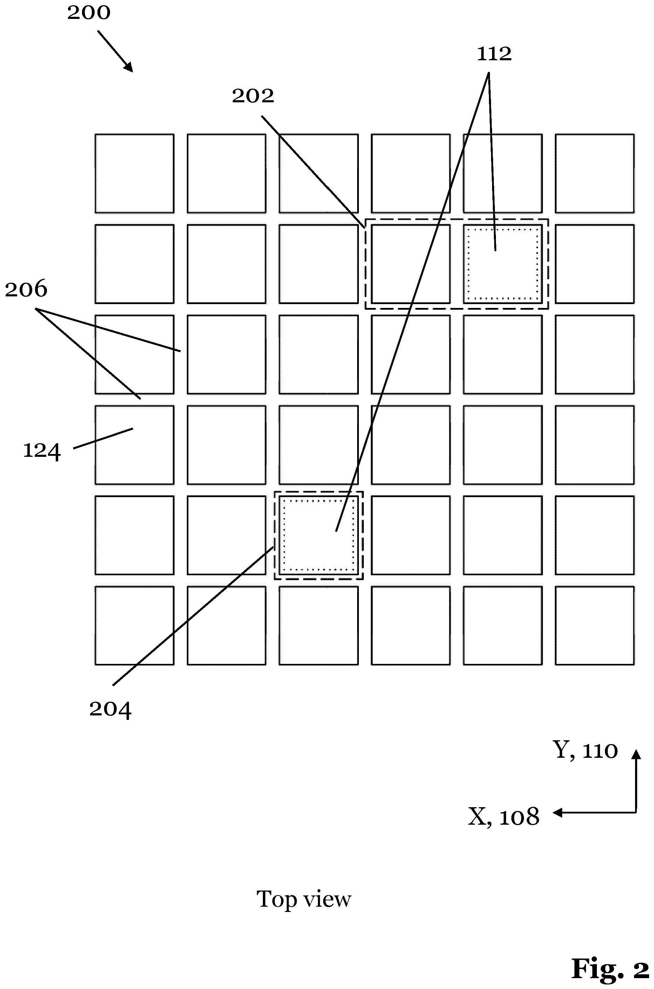

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

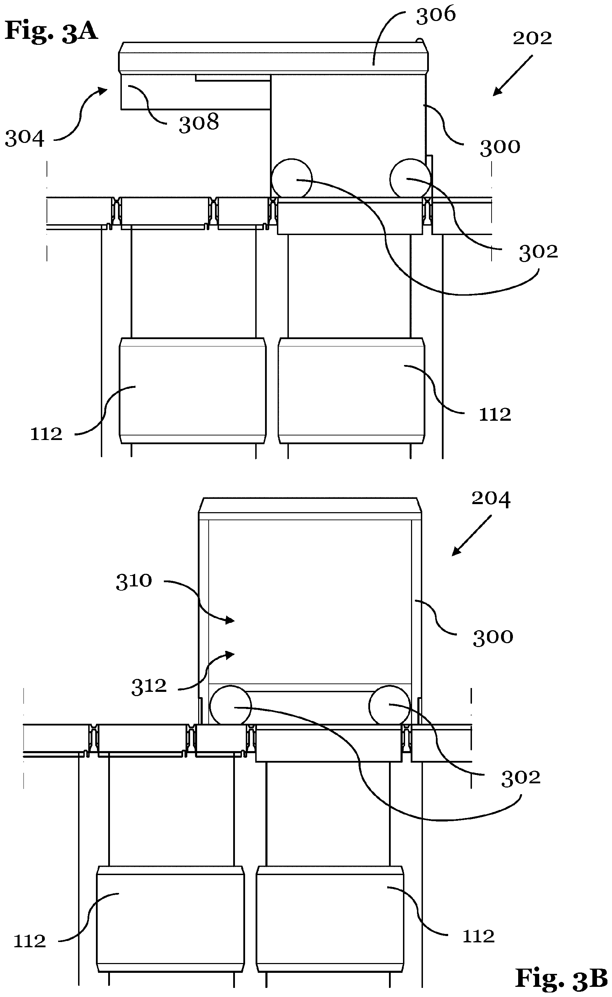

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

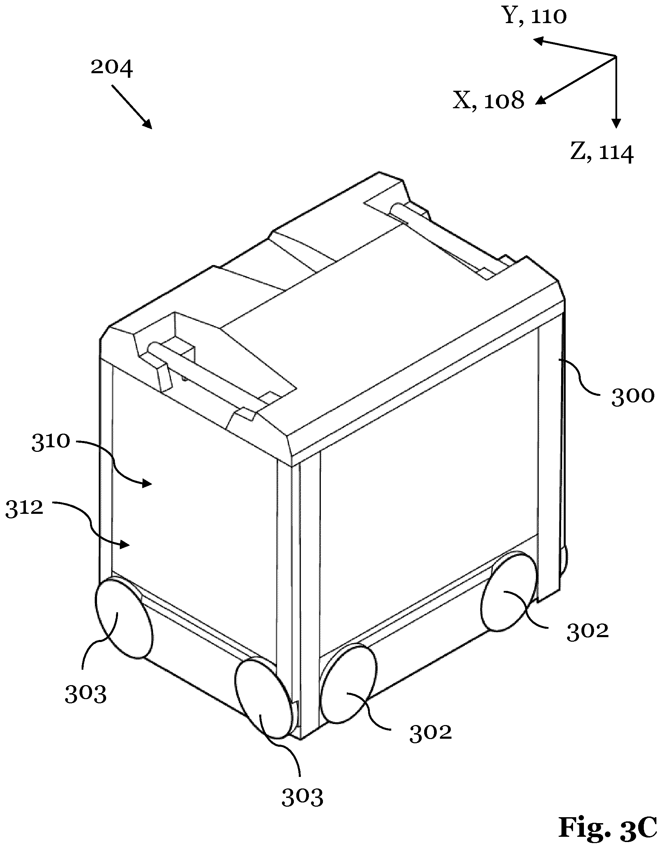

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

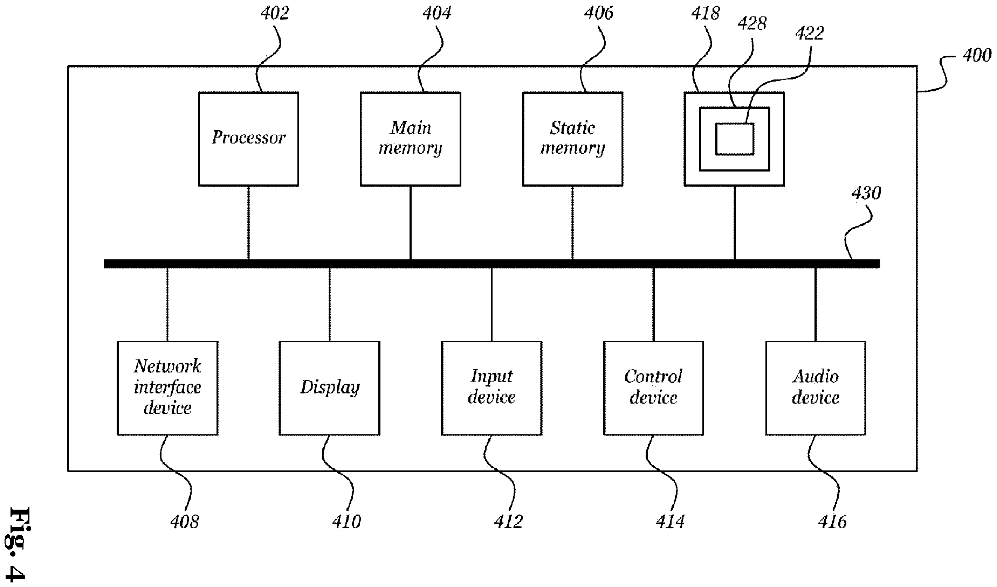

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Port Control

The ports of the automated storage and retrieval system are configured for accessing containers that are stored within the storage area, or grid, of the automated storage and retrieval system. At the ports, operators are able to access the containers to retrieve and/or deposit items (also referred to as objects) into the containers.

In the basic operation of a container retrieval process, a container-handling robotic vehicles lowers its gripping device into the grid to engage a container stored therein. The container-handling robotic vehicle then lifts the container with its lifting device and carries the container as it traverses the grid. When the container-handling robotic vehicle arrives at the port, the container-handling robotic vehicle lowers the container into the port using its lifting device. The container-handling robotic vehicle then disengages the gripping device. A conveyer moves the container to an accessible point in the port at which an operator (such as a human, or robotic picking device) inserts or removes item(s) to/from the container. The container is then moved to a point in the port at which it is retrieved by a container-handling robotic vehicle (either the same or a different container-handling robotic vehicle). The container-handling robotic vehicle lowers its lifting device and engages the container with its gripping device. The container-handling robotic vehicle then lifts the container, and then traverses the grid whilst carrying the container to a storage location where the container is then lowered and disengaged.

The present disclosure is directed to the control, by a controller, of the movement of containers at a port.

In some cases, the gripping device is not able to correctly engage the container when retrieving the container from the port. This can happen if, for example, the container is not correctly aligned with the gripping device, or if item(s) in the container are projecting from the top of the container and inhibiting the gripping device from being able to engage the container, or if the container is deformed or damaged.

In such cases, storage and retrieval efficiency could be adversely impacted if (a) the container cannot be promptly returned to the storage area, and (b) a subsequent container cannot be received at the port.

The present disclosure is also directed to controlling, by a controller, the recovery of errors when a container cannot be engaged by a container lifting device (also referred to a container lift) at the port.

The present disclosure will now be described in general terms before implementations of the disclosure are described by way of example with reference to the drawings. The words "may" and "can" are used to refer to a feature that is optional, i.e. in some implementations of the disclosure, the feature is present, and in some implementations of the disclosure, the feature is not present.

A controller is provided. The controller can be configured to control movement of containers at a port of an automated storage and retrieval system. The port can be configured for accessing containers in the automated storage and retrieval system. The port can comprise a first position, a second position, and a third position for containers.

The first position can be a position in which a container is accessible by an operator for the insertion and/or removal of objects into/from the container.

The second position can be below a shaft through which containers are delivered from a storage area in the automated storage and retrieval system to the port, and/or delivered from the port to the storage area. The containers can be delivered by a container lift.

The third position can be a position in which a container is temporarily stowed.

The port can further comprise a conveyer configured to move containers between the first position, the second position and the third position.

The controller can be configured to perform steps comprising determining a first container in the second position cannot be lifted by the container lift, and a second container is in the first position.

The steps can comprise controlling the conveyer to move the first container from the second position to the third position.

The steps can comprise controlling the conveyer to move the second container from the first position to the second position.

The steps can comprise controlling the conveyer to move the first container from the third position to the first position for reconfiguration of the first container.

The steps can comprise controlling the conveyer to move the first container from the first position to the second position when the first container has been reconfigured.

The steps can comprise initiating delivery of the first container from the port to the storage area by the container lift when the first container is reconfigured and in the second position.

In this way, there is improved port throughput leading to improved storage and retrieval efficiency. Downtime of the port is reduced because stuck containers (i.e., containers that cannot be lifted by the container lift) can be quickly resolved. Moreover, the process does not require a human operator to enter the port, or insert a hand/arm into the port. This avoids injury and also saves time in rectifying the error.

The controller can also be configured to perform a step of initiating delivery of the second container to the storage area by the container lift when the second container is in the second position. The controller can be configured to control the conveyer to move the first container from the third position to the first position when the second container has been lifted from the second position by the container lift.

In this way, the second container can still be processed and returned for storage in the storage area even when the first container cannot be lifted by the container lift. That is, the stuck first container does not prevent the second container from being processed at the port for the insertion/removal of items, and returned to the storage area by the container lift.

There is, therefore, improved port throughput leading to improved storage and retrieval efficiency. Furthermore, a container-handling robotic vehicle that was intended to collect the first container can collect the second container instead, when the first container cannot be lifted by the container lift. This further enhances storage and retrieval efficiency.

When the second container in the second position cannot be lifted by the container lift, the controller can be configured to perform steps comprising controlling the conveyer to move the second container from the second position to the first position for reconfiguration of the second container. The steps can comprise controlling the conveyer to move the second container from the first position to the second position when the second container has been reconfigured. The steps can comprise reinitiating delivery of the second container to the storage area by the container lift when the second container is reconfigured and in the second position.

The controller can be configured to control the conveyer to move to the second container from the first position to the second position in response to a determination that an operation at the second container is complete. The operation can comprise the insertion and/or removal of one or more objects into/from the second container.

The step of controlling the conveyer to move the first container from the first position to the second position when the first container has been reconfigured can comprise controlling the conveyer to move the first container from the first position to the third position. The step can further comprise initiating the delivery of a third container to the port by the container lift when the first container is in the third position. The third container can be received in the second position. The step can further comprise controlling the conveyer to move the third container from the second position to the first position. The step can further comprise controlling the conveyer to move the first container from the third position to the second position.

In this way, a third container can be received and processed at the port, even when the first container cannot be lifted by the container lift. That is, the stuck first container does not prevent the third container from arriving at the port. Furthermore, the container-handling robotic vehicle that delivered the third container to the port can be available to collect the first container from the port when the first container has been reconfigured to a state in which it can be lifted by the container lift. This minimises any waiting time for a container-handling robotic vehicle to be available to collect the reconfigured first container. There is, therefore, improved port throughput leading to improved storage and retrieval efficiency.

The first container may be unable to be lifted by the container lift because at least one object in the first container is protruding from a top opening of the first container. Reconfiguring the first container can comprise rearranging one or more objects in the first container so that no objects are protruding from the top opening of the first container.

The first container may be unable to be lifted by the container lift because the first container is misaligned with a gripping device of the container lift. The gripping device can be configured to engage the first container. Reconfiguring the first container can comprise repositioning the first container on the conveyer for alignment with the gripping device.

The first container may be unable to be lifted by the container lift because the first container is deformed or damaged. Reconfiguring the first container can comprise rearranging one or more objects in the first container, or replacing the first container.

The container lift can comprise a gripping device configured to engage a container. When delivering a to-be-accessed container to the port, wherein the to-be-accessed container is a container that is to be delivered to the port from the storage area, the controller can be configured to perform steps comprising controlling the container lift to lower the to-be-accessed container into the second position by lowering the gripping device engaged with the to-be-accessed container.

The steps can comprise controlling the container lift to release the to-be-accessed container from the gripping device.

The steps can comprise controlling the container lift to hold the gripping device in a lowered state wherein the gripping device is proximal to the second position while the to-be-accessed container is moved from the second position by the conveyer and a to-be-stored container is moved to the second position by the conveyer. In the lowered state, the gripping device can be raised slightly from the second position, whilst proximal to the second position, to avoid obstructing movement of containers by the conveyer.

The steps can comprise controlling the container lift to engage the to-be-stored container with the gripping device. The to-be-stored container can be a container that is to be delivered to the storage area from the port. The steps can comprise controlling the container lift to lift the to-be-stored container from the second position by raising the gripping device.

The first position, second position and third position can be arranged in a line.

The second position can be located between the first position and the third position.

The operator can be a human operator.

The operator can be an object picking robotic device.

The container lift can be a component of container-handling robotic vehicle. The container-handling robotic vehicle can be configured to transport containers in the automated storage and retrieval system.

When initiating delivery of a container from/to the port to/from the storage area, the controller can be configured to send a control signal to the container-handling robotic vehicle to lower the gripping device of the container lift to the second position in the port.

The controller can determine, with a sensor, that the first container cannot be lifted.

The sensor can be a weight sensor of the container lift. The weight sensor can be configured to detect that the first container is not engaged with the container lift when the container lift attempts to lift the first container.

The sensor can be arranged at the second position in the port. The sensor can detect that the first container has remained in the second position when the container lift attempts to lift the first container.

The sensor can be an optical sensor or a weight sensor.

The sensor can be integrated into a gripping device of the container lift. The gripping device can be configured to engage the first container. The sensor can determine that the gripping device is engaged and/or not engaged to the first container.

The conveyer can comprise a conveyer belt.

The conveyer belt can extend between the first position, second position and third position.

The conveyer can be configured to move each container on the conveyer in unison.

A port of an automated storage and retrieval system is provided.

The port can be configured for accessing containers in the automated storage and retrieval system.

The port can comprise a first position, a second position, and a third position for containers.

The first position can be a position in which a container is accessible by an operator for the insertion and/or removal of objects into/from the container.

The second position can be below a shaft through which containers are delivered from a storage area in the automated storage and retrieval system to the port, and/or delivered from the port to the storage area, by a container lift.

The third position can be a position in which a container is temporarily stowed.

The port can further comprise a conveyer configured to move containers between the first position, the second position and the third position.

The port can be configured to be controlled by the controller described above.

An automated storage and retrieval system is provided.

The automated storage and retrieval system can comprise the controller described above.

The automated storage and retrieval system can comprise the port described above.

The automated storage and retrieval system can comprise the port described above, controlled by the controller described above.

A method of controlling the movement of containers at a port of an automated storage and retrieval system is provided.

The port can be configured for accessing containers in the automated storage and retrieval system.

The port can comprise a first position, a second position, and a third position for containers.

The first position can be a position in which a container is accessible by an operator for the insertion and/or removal of objects into/from the container.

The second position can be below a shaft through which containers are delivered from a storage area in the automated storage and retrieval system to the port, and/or delivered from the port to the storage area, by a container lift.

The third position can be a position in which a container is temporarily stowed.

The port can further comprise a conveyer configured to move containers between the first position, the second position and the third position.

The method can comprise determining a first container in the second position cannot be lifted by the container lift, and a second container is in the first position.

The method can comprise controlling the conveyer to move the first container from the second position to the third position.

The method can comprise controlling the conveyer to move the second container from the first position to the second position.

The method can comprise controlling the conveyer to move the first container from the third position to the first position for reconfiguration of the first container.

The method can comprise controlling the conveyer to move the first container from the first position to the second position when the first container has been reconfigured.

The method can comprise initiating delivery of the first container from the port to the storage area by the container lift when the first container is reconfigured and in the second position.

The method can comprise any of the features described above with reference to the provided controller.

A computer-readable medium is provided.

The computer-readable medium can store instructions that, when executed by one or more processors, control movement of containers at a port of an automated storage and retrieval system.

The port can be configured for accessing containers in the automated storage and retrieval system.

The port can comprise a first position, a second position, and a third position for containers.

The first position can be a position in which a container is accessible by an operator for the insertion and/or removal of objects into/from the container.

The second position can be below a shaft through which containers are delivered from a storage area in the automated storage and retrieval system to the port, and/or delivered from the port to the storage area, by a container lift.

The third position can be a position in which a container is temporarily stowed.

The port can further comprise a conveyer configured to move containers between the first position, the second position and the third position.

The instructions can comprise determining a first container in the second position cannot be lifted by the container lift, and a second container is in the first position.

The instructions can comprise controlling the conveyer to move the first container from the second position to the third position.

The instructions can comprise controlling the conveyer to move the second container from the first position to the second position.

The instructions can comprise controlling the conveyer to move the first container from the third position to the first position for reconfiguration of the first container.

The instructions can comprise controlling the conveyer to move the first container from the first position to the second position when the first container has been reconfigured.

The instructions can comprise initiating delivery of the first container from the port to the storage area by the container lift when the first container is reconfigured and in the second position.

The computer-readable medium can comprise any of the features described above with reference to the provided controller.

The computer-readable medium can be a non-transitory computer-readable medium.

Each possible combination of any of the above-described features forms part of the present disclosure. A plurality of instances of any feature may also be present.

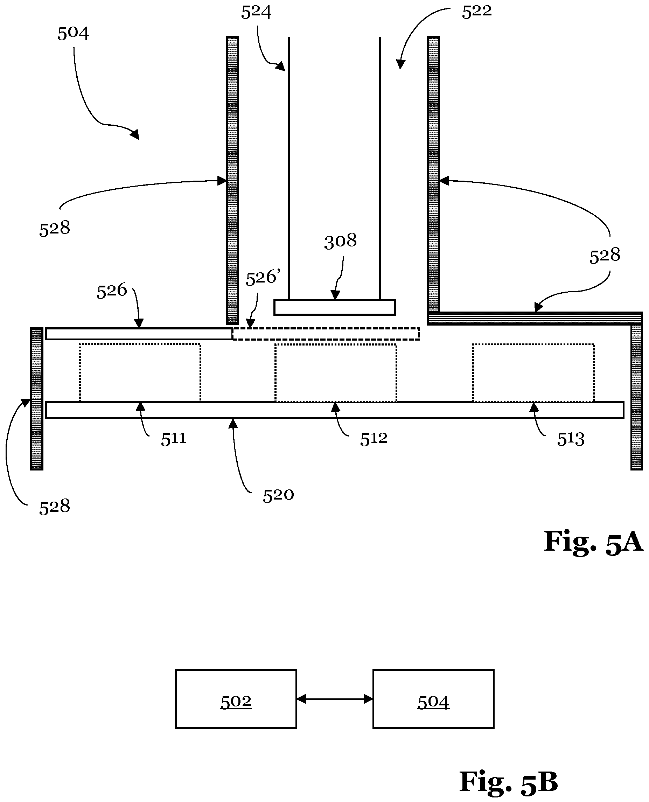

By way of example, implementations of the disclosure will now be described with reference to Figs. 5 to 9. Each possible combination of any features described below with any features described above also forms part of the disclosure.

Fig. 5A shows a conceptual cross-sectional diagram of a port 504.

The port 504 can be considered similar in purpose to the ports 130, 132 described with reference to Fig. 1.

The port 504 has three positions for containers: a first position 511, a second position 512, and a third position 513.

The first position 511, the second position 512 and the third position 513 are each dimensioned to accommodate a container.

The first position 511 is a position in which a container is accessible by an operator for the insertion and/or removal of item(s) into/from the container. In some cases, the container can be removed from the port 504 when the container is in the first position 511, and containers can be inserted into the port 504 in the first position 511. The containers have open tops through which the item(s) can be inserted to / removed from the containers.

The second position 512 is below a shaft 522 through which containers are delivered from a storage area 100 in the automated storage and retrieval system to the port 504, and delivered from the port 504 to the storage area 100. The containers are delivered between the port 504 and the storage area 100 by a container lift 524. The shaft 522 can be considered similar in purpose to the port columns 126, 128 described with reference to Fig. 1. The storage area 100 can be considered the grid or storage grid 100 as described with reference to Fig. 1.

The container lift 524 is integrated into a container-handling robotic vehicle 122 (not shown in Fig. 5A, but visible in Fig. 1) that traverses the grid 100, such as those described with reference to Fig. 3A-3C. The container lift 524 comprises the lifting device 304 and the gripping device 308 of the container-handling robotic vehicle 122.

The container-handling robotic vehicles 122 traverse the top of the grid 100. The port 504 is at a lower position (e.g., at the bottom of the grid as depicted in the example of Fig. 1). One end of the shaft 522 (i.e., the top end) is in the top of the grid 100 such that container-handling robotic vehicles 122 can traverse the top of the grid 100 to this top end of the shaft 522. The port 504 is located below the shaft 522 at the opposite end of the shaft 522 (i.e., the bottom end).

A container-handling robotic vehicle 122 retrieves a container from a storage location by lowering its gripping device 308 into an opening through the grid and engaging the container with the gripping device 308. The container-handling robotic vehicle 122 then traverses the grid 100 to the top end of the shaft 522. When at the top end of the shaft 522, the container-handling robotic vehicle 122 lowers the container down the shaft 522 to the port 504, where it is placed in the second position 512 and released from the gripping device 308.

When collecting a container from the port 504, the container-handling robotic vehicle 122 lowers the gripping device 308 into the shaft 522 to engage a container in the second position 512 at the port 504, and lifts the container from the second position 512 up to the container-handling robotic vehicle 122. The container-handling robotic vehicle 122 then traverses the grid while carrying the container.

When depositing a container at the port 504, the container-handling robotic vehicle 122 carries a container to the shaft 522, engaged with the gripping device 308. The container handling robotic vehicle 122 lowers the gripping device 308 (and container) into the shaft 522. When the container meets a conveyer 520 at the second position 512, the container-handling robotic vehicle 122 controls the gripping device 308 to disengage the container. The container is then deposited in the port 504. The container-handling robotic vehicle 122 can then retract, or lift, the gripping device 308 up the shaft 522.

In an alternative, the container lift 524 can be a fixed lift in/above the shaft 522, rather than integrated into a container-handling robotic vehicle 122.

The third position 513 is a position in which a container is temporarily stowed. This will be explained in more detail subsequently, with regard to the operation of the port 504.

The first position 511, the second position 512 and the third position 513 are arranged in a line. The second position 512 is between the first position 511 and the third position 513. The line extends inwardly to the three-dimensional grid structure, from the first position 511 to the third position 513. The first position 511 is outside the grid structure. The second position 512 is at the edge of the grid structure, below the shaft 522. The third position 513 displaced inward to the grid structure.

The conveyer 520 is configured to move containers between the first position 511, the second position 512 and the third position 513.

The conveyer 520 is a conveyer belt. The conveyer belt extends between first position 511 and the third position 513.

When a container enters the port 504, through the shaft 522, it is placed onto the conveyer 520. As the conveyer 520 moves, containers on the conveyer 520 move with it. When more than one container is on the conveyer 520, these containers move in unison.

The first position 511, second position 512, third position 513, and conveyer 520 can be within a port housing 528.

A hatch 526 covers the first position 511, for safety. The hatch 526 allows operator access into the port housing 528, and in particular access to the first position 511. The hatch 526 is configured as a panel that is over the first position 511 when in the closed state. The hatch 526 is configured to slide to the open state 526'. When the hatch 526 is in the open state 526', it is over the second position 512 in the port 504. The hatch 526 is configured to be in the closed state before a container arrives in the first position 511, and when containers are being moved into / out of the first position 511 by the conveyer 520. This inhibits a human operator from trapping fingers or limbs in the moving components. The hatch 526 is configured to switch from the closed state (as depicted in Fig. 5A) to the open state (as indicated by the dashed line box 526' in Fig. 5A) when a container has arrived in the first position 511, so that an operator can insert/remove item(s) to/from the container.

In some examples, the hatch 526 automatically opens and closes. In other examples, the hatch 526 is manually opened and closed, by an operator. The hatch 526 can be automatically locked and released, to prevent an operator from opening the hatch 526 at the wrong time. In some examples, the hatch 526 needs to be in a closed position for a container to be moved to/from the first position 511 by the conveyer 520, and movement of the conveyer 520 is inhibited when the hatch 526 is open.

Fig. 5B shows a block diagram of the interaction between the port 504 and a controller 502 of the port 504.

The controller 502 controls the operation of the port 504.

The controller 502 controls the movement of the conveyer 520. The controller 502 can control the hatch 526. The controller 502 controls the initiation of containers being lowered into the port / raised from the port 504 by the container lift 524.

That is, the controller 502 is a processing unit or computer (or subcomponent thereof) that executes software to control the hardware elements of the port 504.

The control system communicates with the hardware elements at the port 504 through wired and/or wireless connections and interfaces.

In an example, the controller 502 is the main control system of the automated storage and retrieval system (e.g., the processing system 400 described with reference to Fig. 4), or a module or software module of such a main controller. Alternatively, the controller 502 is a separate control system that controls the port 504. The controller 502 communicates / interfaces with the main control system. The main control system controls the container-handling robotic vehicles 122, or a separate robotic vehicle controller that is a component of / interfacing with the main control system controls the container-handling robotic vehicles 122. Through being either a component of the main control system, or through interfacing with the main control system, the controller 502 can therefore initiate the lowering/raising of the container lift 524 through the shaft 522 to deposit and collect containers by sending a control signal directly to the container-handling robotic vehicle 122 or container lift 524, or indirectly to the container-handling robotic vehicle 122 or container lift 524 via other control systems in communication with the controller 502.

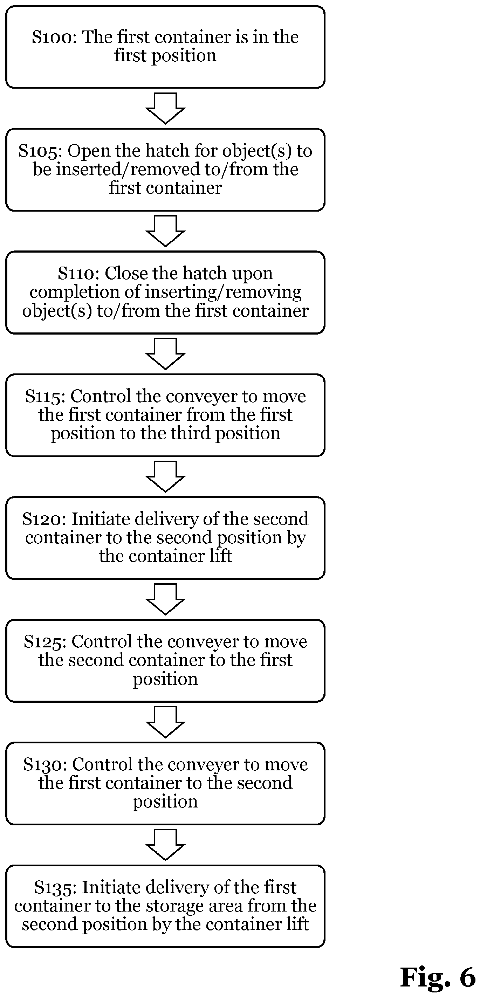

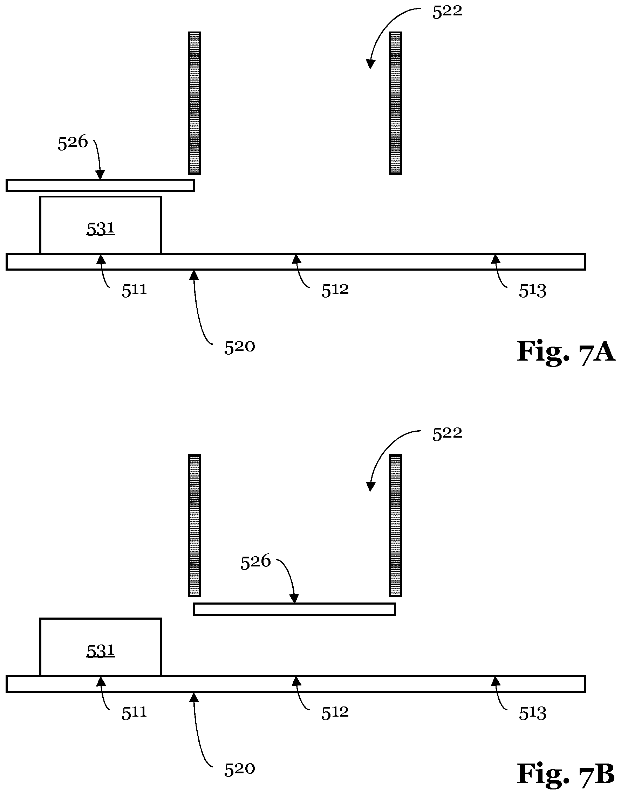

Fig. 6 is a flow chart of the operation of the port 504, as controlled by the controller 502. In particular, the flow chart corresponds to a procedure for providing a first container 531 to be accessible in the first position 511 for the insertion/removal of item(s) to/from the container, receiving a second container 532 at the port 504, and returning the first container 531 to the storage area 100 of the automated storage and retrieval system. Figs. 7A-7F show conceptual cross-sectional views of the port 504 of Fig. 5A at stages corresponding to the steps of the flow chart of Fig. 6. Some of the port housing 528 has been removed in Figs. 7A-7F compared to Fig. 5A for ease of visualisation of the movement of the containers.

At step S100, the first container 531 is in the first position 511.

The hatch 526 is closed at step S100. This is depicted in Fig. 7A.

In an example, prior to step S100, the first container 531 has been moved to the first position 511 by the conveyer 520. Prior to that, for example, the first container 531 has been lowered into the second position 512 through the shaft 522 by the container lift 524.

The process proceeds to step S105.

At step S105, the hatch 526 is opened for one or more objects to be inserted or removed to/from the first container 531. That is, the hatch 526 moves from the closed state to the open state so that the first container 531 in the first position 511 is accessible to an operator.

This is depicted in Fig. 7B.

As discussed, the hatch 526 can be opened automatically by the controller 502, or manually opened by an operator, and unlocked automatically by the controller 502, when the first container 531 is in the first position 511.

When the hatch 526 is open, the operator is able to insert/remove one or more objects to/from the first container 531.

The one or more objects are inserted to / removed from the first container 531 by a robotic item picking device, or by a human operator.

The process proceeds to step S110.

At step S110, the hatch 526 is closed. The hatch 526 is closed upon completion of the insertion or removal of the one or more items to/from the first container 531.

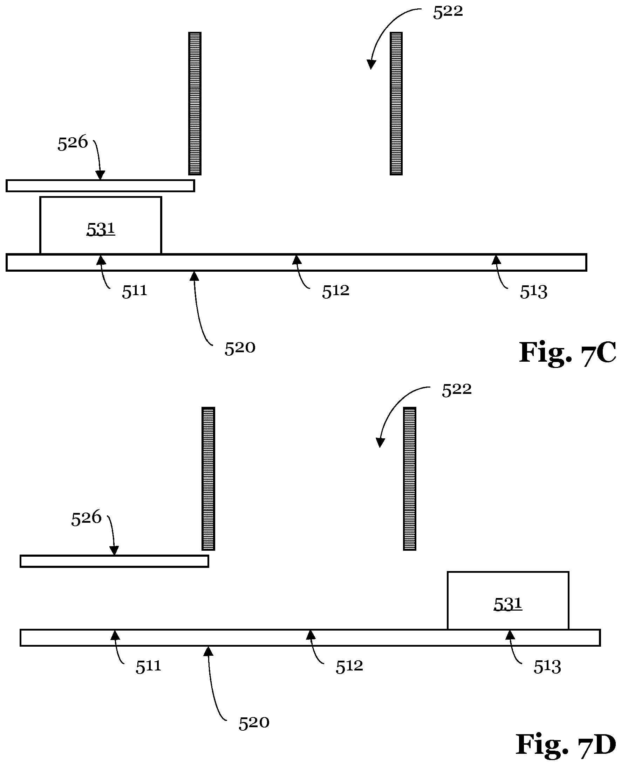

This is depicted in step Fig. 7C.

In some cases, for example when the operator is a robotic item picking device that inserts/removes items, the hatch 526 is triggered to close by the controller 502 when the robotic item picking device completes an item insertion / removal operation. When the operator is a human, the hatch 526 can be triggered to close by the pressing of a button to indicate that the insertion / removal of the requisite item(s) is complete and the hatch 526 closes. Alternatively, the human operator manually closes the hatch 526 when the insertion / removal of the requisite item(s) is complete. Such a button-press or manual hatch 526 closing indicates to the controller 502 that the insertion / removal of the requisite item(s) is complete

When the hatch 526 closes, or when the insertion/removal of item(s) is complete, the process proceeds to step S115.

At step S115, the controller 502 controls the conveyer 520 to move the first container 531 from the first position 511 to the third position 513.

The hatch 526 remains closed.

This is depicted in Fig. 7D.

The third position 513 is a position in which containers are temporarily stowed. This temporary stowing position allows for the next container to be delivered to the second position 512 by the container lift 524.

The first position 511 is on one side of the shaft 522 (i.e., on one side of the second position 512) and the third position 513 is on the opposite side of the shaft 522 (i.e., on the opposite side of the second position 512). When the first container 531 is moved by the conveyer 520 from the first position 511 to the third position 513, the first container 531 passes through the second position 512.

When the first container 531 is in the third position 513, the process proceeds to step S120.

At step S120, the controller 502 initiates delivery of a second container 532 to the second position 512 by the container lift 524.

The second container 532 is a different container to the first container 531.

That is, the controller 502 sends a control signal via a communication channel that instructs the container lift 524 to lower the second container 532.

For example, the control signal is sent to a container-handling robotic vehicle 122 that is carrying the second container 532. The control signal instructs the container-handling robotic vehicle to lower the second container 532 into the shaft 522 using the container lift 524.

The container-handling robotic vehicle 122 will have been separately instructed to retrieve the second container 532 from the storage grid 100 and traverse the grid to the port 504. For example, this takes place during or before steps S100-S115 taking place. In this way, the second container 532 is ready to be lowered into the second position 512 upon instruction from the controller 502 when the port 504 is ready to receive the second container 532 (when the first container 531 is in the third position 513).

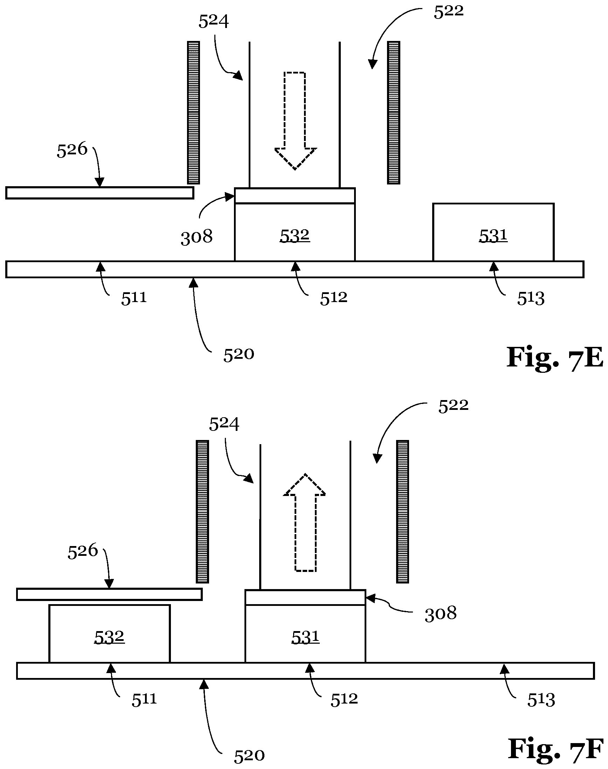

The second container 532 is lowered into the second position 512 by the container lift 524. This is depicted in Fig. 7E.

The hatch 526 is in the closed state. The first container 531 is in the third position 513.

When the second container 532 has been placed in the second position 512 by the container lift 524, the gripping device 308 is controlled to disengage the second container 532.

When the gripping device 308 has disengaged the second container 532, the gripping device 308 can be partially or fully retracted up the shaft 522 by the container lift 524. For example, when the gripping device 308 is partially retracted, it is lifted slightly above the second position 512 so that a container can move out of the second position 512 on the conveyer 520 without interference from the gripping device 308.

When the second container 532 is in the second position 512, the process then proceeds to step S125.

At step S125, the controller 502 controls the conveyer 520 to move the second container 532 from the second position 512 to the first position 511.

At step S130, the controller 502 controls the conveyer 520 to move the first container 531 from the third position 513 to the second position 512.

When the conveyer 520 comprises a belt that extends between the first and third position 513, the first container 531 and second container 532 move in unison. That is, steps S125 and S130 happen simultaneously. In an alternative in which the conveyer 520 comprises discrete conveyers at / between each position, step S125 and step S130 can be performed simultaneously, or sequentially with step S125 before step S130.

The process then proceeds to step S135.

At step S135 the second container 532 is in the first position 511. The first container 531 is in the second position 512.

At step S135, the controller 502 initiates delivery of the first container 531 to the storage area 100 from the second position 512 by the container lift 524.

The controller 502 sends a control signal via a communication channel that instructs the container lift 524 the lower the gripping device 308 to collect the first container 531.

The control signal is sent to a container-handling robotic vehicle 122. The control signal instructs the container-handling robotic vehicle 122 to lower the gripping device 308 for engaging the first container 531. The control signal is sent in a similar manner to that described for step S120, but for collecting a container from the port 504, rather than delivering a container to the port 504.

In examples in which the gripping device 308 has been partially retracted, the container lift 524 lowers the gripping device 308 onto the first container 531 from this partially retracted position. It is the same container-handling robotic vehicle 122 that delivered the second container 532 to the port 504 as that which collects the first container 531 from the port 504 for delivery to the storage area 100 in the grid. That is, the container-handling robotic vehicle 122 waits at the port 504 with the gripping device 308 lowered into the shaft 522 while steps S125 and S130 take place. This is advantageous in saving time in raising and lowering the gripping device 308, thereby providing improved storage and retrieval throughput at the port 504.

Alternatively, when the gripping device 308 is fully retracted up the shaft 522 by the container lift 524 after delivering the second container 532, the container lift 524 lowers the gripping device 308 down the shaft 522 and onto the first container 531. In this case, it can be the same container-handling robotic vehicle that delivered the second container 532 to the port 504, or a different container-handling robotic vehicle that has been instructed to traverse the grid to the port 504 for collection of the first container 531.

When the gripping device 308 meets the first container 531, the gripping device 308 engages the first container 531. The container lift 524 then lifts the first container 531 up the shaft 522.

This is depicted in Fig. 7F.

The container-handling robotic vehicle 122 is then controlled to deliver the first container 531 to a storage location in the grid 100.

The second container 532 is in the first position 511, and the process loops back to step S100, with the second container 532 now treated as the first container 531, and a third container treated as the second container 532. This process repeatedly loops from step S100 to S135, and back to S100, for subsequent operations in delivering containers to the port 504 for the insertion/removal of item(s) and for returning the containers to storage in the grid 100.

In some cases, at step S135, there can be a possibility that the gripping device 308 is unable to engage the first container 531. Consequently, the first container 531 cannot be lifted from the second position 512, by the container lift 524, for delivery to the storage area 100.

This can occur when, for example, one or more items are protruding from the top of the container preventing the gripping device 308 from being able to grip the container. In another example, this can occur when the container is not correctly positioned on the conveyer 520 for alignment with the gripping device 308. Due to the misalignment, the gripping device 308 may not be able to engage the corresponding portion of the container. In another example, a heavy item or items (such as a bowling ball) in the container could cause the container to shift in position when the container arrives at the second position 512, due to the momentum of the item in the container. This can cause a misalignment with the gripping device 308. In another example, the container could be damaged or deformed which can lead to a misalignment with the gripping device 308. Such deformation could be due to damage, or a temporary deformation due to a distribution of heavy item(s) at one end of the container.

When the gripping device 308 is unable to engage the first container 531, an error occurs at the port 504 because the first container 531 cannot be lifted by the container lift 524 to be returned to the storage area 100. In other words, the first container 531 is stuck in the port 504, and the port 504 is blocked. This can impact storage and retrieval throughput at the port 504. In systems where containers and delivered and collected from the port 504 with a high frequency, such blocked ports can stochastically build up and have a serious impact on storage and retrieval throughput.

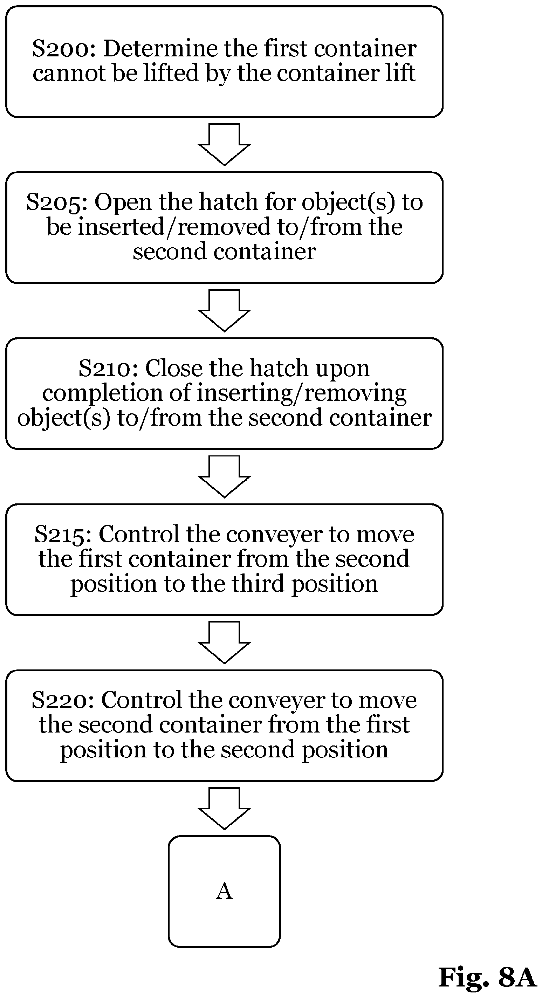

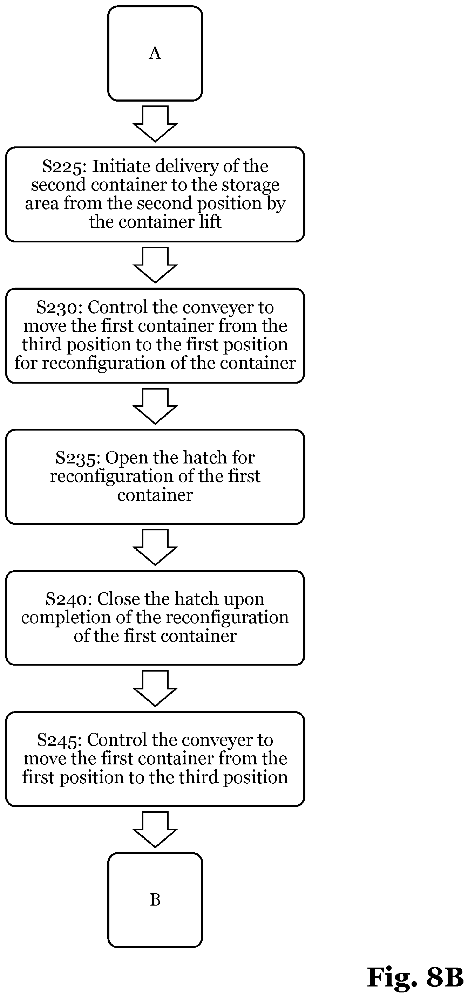

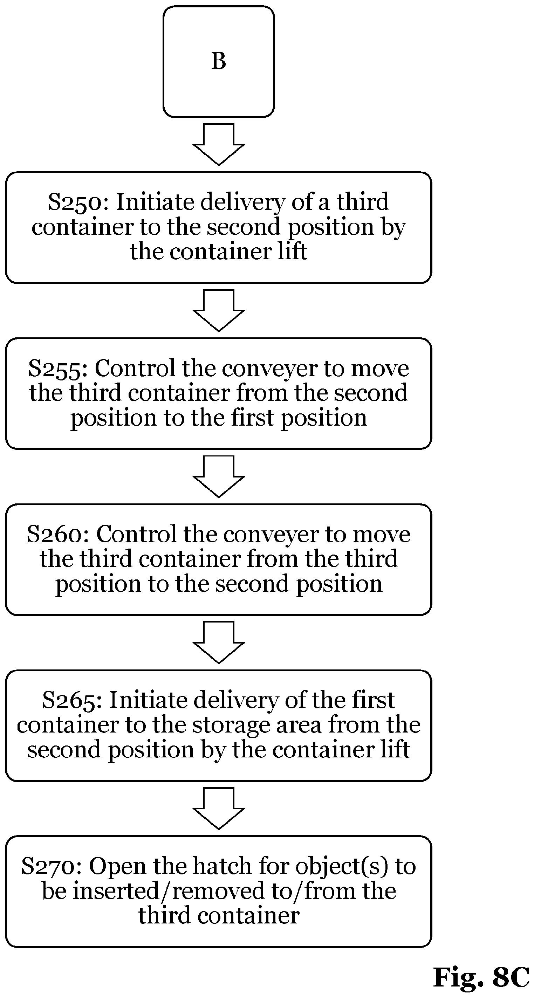

Figs. 8A-8C are a flow chart of an error recovery process performed by the controller 502 to quickly and efficiently remedy such a stuck container, while simultaneously continuing with the retrieval and delivery of containers to the port 504. This allows for continued throughput at the port 504, whilst simultaneously fixing the error. There is, therefore, improved storage and retrieval efficiency in port error situations. The process also obviates an operator having to enter the port 504 to correct the error, thereby providing user safety.

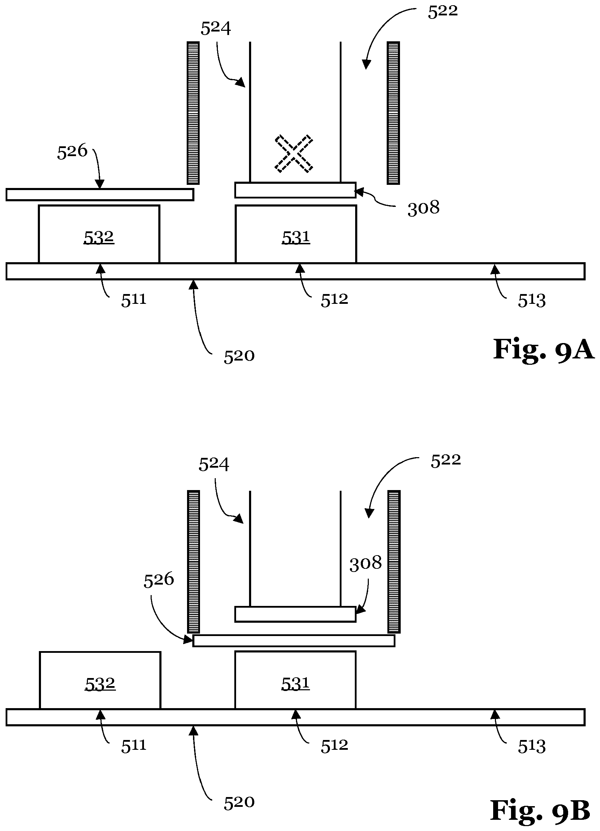

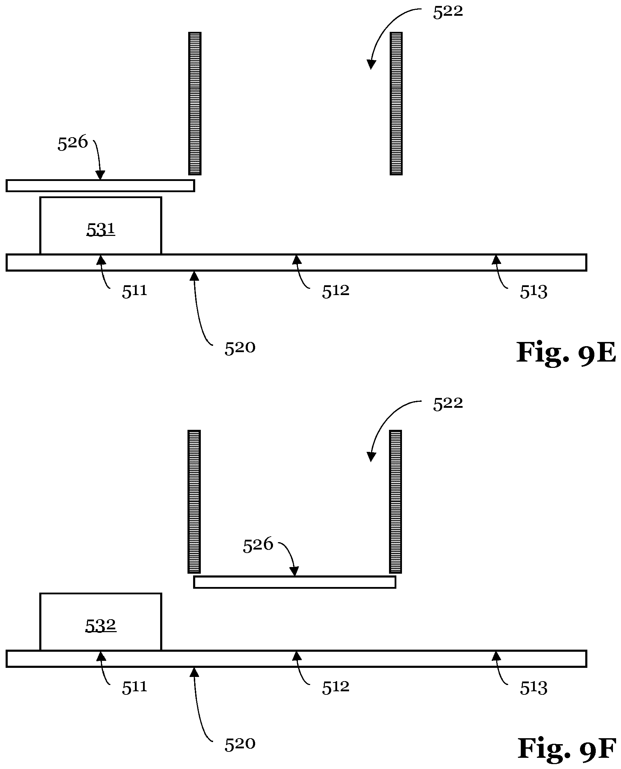

Figs. 9A-9L show conceptual cross-sectional views of the port 504 of Fig. 5A at stages corresponding to the steps of the flow chart of Figs. 8A-8C. As with Figs. 7A-7F, some of the port housing 528 has been removed in Figs. 9A-9L compared to Fig. 5A for ease of visualisation.

The error recovery process beings at step S200.

Step S200 can be considered to occur when the gripping device 308 is unable to engage the first container 531 at step S135 of Fig. 6.

At step S200, the controller 502 determines that the first container 531 cannot be lifted by the container lift 524.

This is depicted in Fig. 9A.

The first container 531 is in the second position 512, and the second container 532 is in the first position 511.

The controller 502 determines, with a sensor, that the first container 531 cannot be lifted by the container lift 524. The sensor sends a signal to the controller 502 indicating that the first container 531 has not been engaged/lifted by the container lift 524.

In a first example, the sensor is a weight sensor of the container lift 524. The weight sensor configured to detect that the container is not engaged with the gripping device 308 when the container lift 524 attempts to lift the container. For example, this can be detected by the container lift 524 motor needing to apply a lower force to lift the gripping device 308 than a threshold expected force for when a container is attached to the gripping device 308.

In a second example, the sensor is arranged at the second position 512 in the port 504. The sensor detects that the container has remained in the second position 512 when the container lift 524 attempts to lift the container. The sensor is, for example, an optical sensor that detects that the first container 531 has not moved when the gripping device 308 is raised, or a weight sensor at the second position 512 that detects that the first container 531 has not moved when the gripping device 308 is raised.

In a third example, the sensor is integrated into the gripping device 308. The sensor determines that the gripping device 308 is engaged and/or not engaged to the container, and a signal is sent indicating this gripping state.

When the controller 502 determines that the first container 531 cannot be lifted by the container lift 524, the process proceeds to step S205.

At step S205, the hatch 526 is opened for one or more items to be inserted to / removed from the second container 532.

That is, the second container 532 remains in the first position 511. The first container 531 remains in the second position 512.

Before the hatch 526 opens the container lift 524 is partially raised to allow the hatch 526 to move over the second position 512. Partially lifting the container lift 524 allows for the gripping device 308 to remain near the bottom of the shaft 522 (i.e., near to the second position 512). In this way, the gripping device 308 is ready to perform a subsequent gripping operation, without needing to be lowered through the full length of the shaft 522. This saves time, and increases system efficiency. Partially raising the gripping device 308 also avoids the gripping device 308 obstructing movement of the containers on the conveyer 250.

This is depicted in Fig. 9B.

In an alternative, before the hatch 526 opens the container lift 524 is fully raised to allow the hatch 526 to move over the second position 512. In this way, the container-handling robotic vehicle 122 can leave the port area and perform other actions elsewhere in the automated storage and retrieval system while step S205-S220 take place.

As already discussed, the hatch 526 can be opened automatically by the controller 502, or manually opened by an operator, and unlocked automatically by the controller 502.

When the hatch 526 is open, the operator is able to insert/remove one or more objects to/from the second container 532.

The process proceeds to step S210.

At step S120, the hatch 526 is closed. The hatch 526 is closed upon completion of the insertion or removal of the one or more items to/from the second container 532.

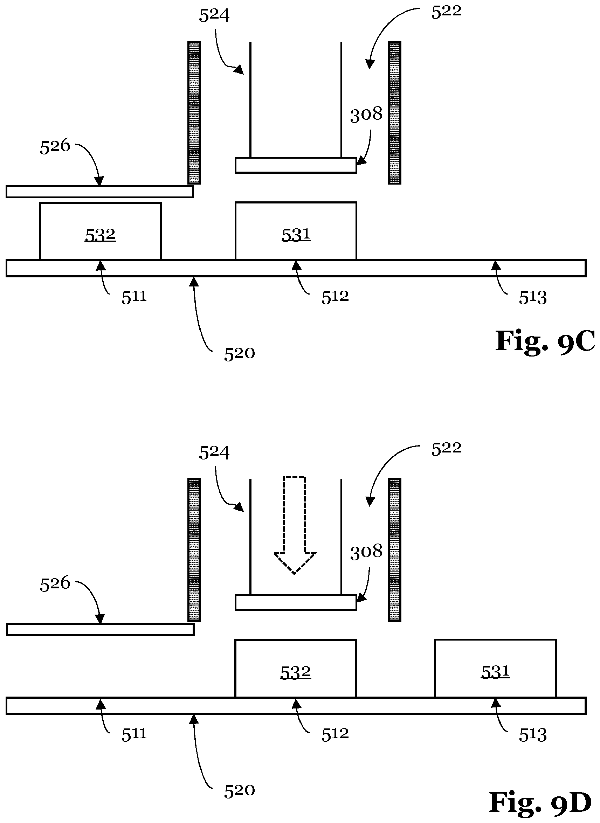

This is depicted in step Fig. 9C.

The hatch 526 closing process can be the same as that already described with reference to step S110. For brevity, the detail is not repeated here.

When the hatch 526 closes or when the insertion/removal of item(s) is complete, the process proceeds to step S215.

At step S215, the controller 502 controls the conveyer 520 to move the first container 531 from the second position 512 to the third position 513.

The hatch 526 remains closed.

At step S220, the controller 502 controls the conveyer 520 to move the second container 532 from the first position 511 to the second position 512.

When the conveyer 520 comprises a belt that extends between the first and third position 513, the first container 531 and second container 532 move in unison. That is, steps S215 and S220 happen simultaneously. In an alternative in which the conveyer 520 comprises discrete conveyers at / between each position, step S215 and step S220 can be performed simultaneously, or sequentially with step S215 before step S220.

When the first container 531 is in the third position 513 and the second container 532 is in the second position 512, the process proceeds to step S225.

At step S225, the controller 502 initiates delivery of the second container 532 to the storage area 100 from the second position 512 by the container lift 524.

That is, the controller 502 initiates the process by which the container lift 524 lowers the gripping device 308 to engage to the second container 532 in the second position 512.

This is depicted in Fig. 9D.

The controller 502 sends a control signal via a communication channel that instructs the container lift 524 the lower the gripping device 308 to collect the second container 532. This collection of the second container 532 from the second position 512 can be executed in the same manner as described with reference to S135 of Fig. 6 (albeit with the second container 532 being collected rather than the first container 531). For brevity, the detail is therefore not repeated here.

The container lift 524 lifts the second container 532, that is engaged by the gripping device 308, up the shaft 522. The container-handling robotic vehicle 122 then delivers the second container 532 to a determined storage location in the storage grid 100.

When the second container 532 has been lifted from the second position 512, the process continues to step S230.

At step S230, the controller 502 controls the conveyer 520 to move the first container 531 from the third position 513 to the first position 511.

When moving the first container 531 from the third position 513 to the first position 511, the first container 531 passes through the second position 512.

When the first container 531 arrives in the first position 511, the hatch 526 is in the closed state.

This is depicted in Fig. 9E.

When first container 531 has arrived in the first position 511, the process continues to step S235.

At step S235, the hatch 526 is opened for the reconfiguration of the first container 531.

This is depicted in 9F.

As already discussed, the hatch 526 can be opened automatically by the controller 502, or manually opened by an operator, and unlocked automatically by the controller 502.

An operator at the port 504 reconfigures the first container 531. The reconfiguration addresses the cause of why the first container 531 could not be engaged by the container lift 524 leading to the determination that the first container 531 could not be lifted at step S200.

The operator can be a human operator or a robotic operator.

The reconfiguration can comprise moving one or more items in the container so that no items protrude from the top of the container. Such reconfiguration can be performed by a human operator or a robotic item picking device.

The reconfiguration can alternatively/additionally comprise repositioning one or more items so that their momentum does not cause the first container 531 to shift in position when the first container 531 subsequently arrives at the second position 512. Such reconfiguration can be performed by a human operator or a robotic item picking device.

The reconfiguration can alternatively/additionally comprise resetting the position of the first container 531 on the conveyer 520, if it is skewed or has shifted, for alignment with the gripping device 308 when the first container 531 is subsequently in the second position 512. This could be performed by a human operator, or a mechanical pushing or pulling device, such as a motorised arm.

The reconfiguration can alternatively/additionally comprise redistributing heavy item(s) to reduce or prevent a deformation of the container. This redistribution can comprise moving the item(s) within the container, or removing one or more heavy items so that they can be placed in a different container. Such reconfiguration can be performed by a human operator or a robotic item picking device.

The reconfiguration can alternatively/additionally comprise replacing the container with a new container when the container is damaged or has a deformation that cannot be rectified. Such reconfiguration can be performed by a human operator, or such reconfiguration can be performed a robotic item picking device and/or container-moving device that swaps the deformed/damaged container for the new container.

When the first container 531 has been reconfigured, the process continues to step S240.

At step S240, the hatch 526 is closed.

The first container 531 is in the first position 511.

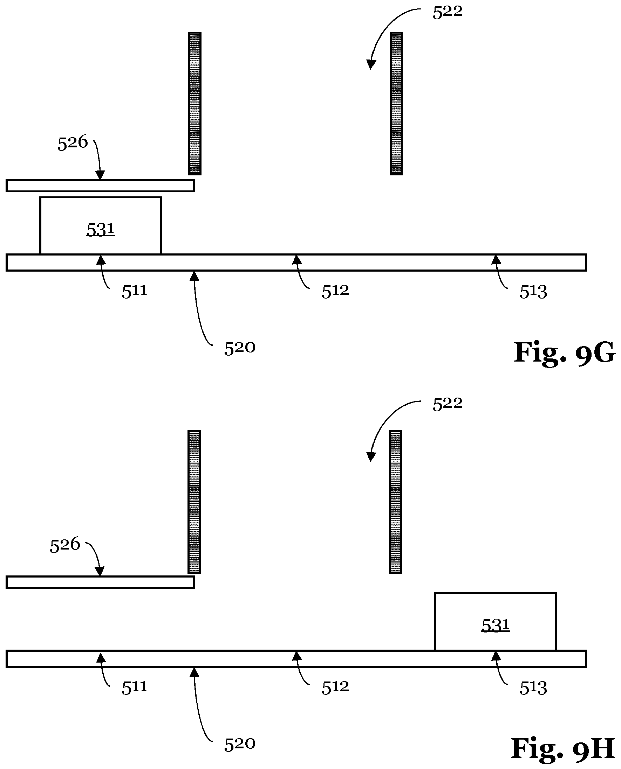

This is depicted in step Fig. 9G.

The hatch 526 closing process can be the same as that already described with reference to step S110. For brevity, the detail is not repeated here.

When the hatch 526 is closed, the process continues to step S245.

At step S245, the controller 502 controls the conveyer 520 to move the first container 531 from the first position 511 to the third position 513.

When moving the first container 531 from the first position 511 to the third position 513, the first container 531 passes through the second position 512.

When the first container 531 arrives in the third position 513, the hatch 526 remains in the closed state.

This is depicted in Fig. 9H.

When the first container 531 is in the third position 513, the process proceeds to step S250.

At step S250, the controller 502 initiates the delivery of a third container 533 to the second position 512 by the container lift 524.

The third container 533 is a different container to the first container 531. The third container 533 can be a different container to the second container 532. In some cases, however, the third container 533 could be the same container as the second container 532, if the second container 532 is needed again at the port 504 for a subsequent insertion/removal of one or more items.

The controller 502 sends a control signal via a communication channel that instructs the container lift 524 to lower the third container 533.

For example, the control signal is sent to a container-handling robotic vehicle 122 that is carrying the third container 533. The control signal instructs the container-handling robotic vehicle 122 to lower the third container 533 into the shaft 522 using the container lift 524.

The container-handling robotic vehicle will have been separately instructed to retrieve the third container 533 from the storage grid and traverse the grid to the port 504. For example, this takes place during or before steps S100-S130 and/or steps S200-S245 taking place. In this way, the third container 533 is ready to be lowered into the second position 512 upon instruction from the controller 502 when the port 504 is ready to receive the third container 533 (when the first container 531 is in the third position 513).

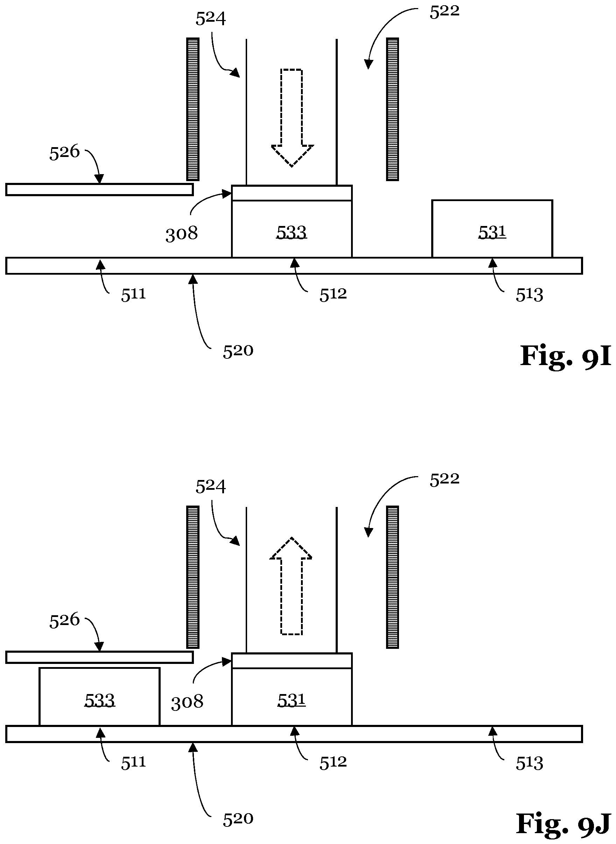

The third container 533 is lowered into the second position 512 by the container lift 524. This is depicted in Fig. 9I.

The hatch 526 is in the closed state. The first container 531 is in the third position 513.

When the third container 533 has been placed in the second position 512 by the container lift 524, the gripping device 308 is controlled to disengage the third container 533.

When the gripping device 308 has disengaged the third container 533, the gripping device 308 can be partially or fully retracted up the shaft 522 by the container lift 524. This can be in a similar manner to that already described for step S120; for brevity, the detail is not repeated here.

When the third container 533 is in the second position 512, the process then proceeds to step S255.

At step S255, the controller 502 controls the conveyer 520 to move the third container 533 from the second position 512 to the first position 511.

At step S260, the controller 502 controls the conveyer 520 to move the first container 531 from the third position 513 to the second position 512.

When the conveyer 520 comprises a belt that extends between the first and third position 513, the first container 531 and third container 533 move in unison. That is, steps S255 and S260 happen simultaneously. In an alternative in which the conveyer 520 comprises discrete conveyers at / between each position, step S255 and step S260 can be performed simultaneously, or sequentially with step S255 before step S260.

When the third container 533 is in the first position 511, and the first container 531 is in the second position 512, the process then proceeds to step S265.

At step S265, the controller 502 initiates delivery of the first container 531 to the storage area 100 from the second position 512 by the container lift 524.

The controller 502 sends a control signal via a communication channel that instructs the container lift 524 the lower the gripping device 308 to collect the first container 531.

The control signal is sent to a container-handling robotic vehicle 122. The control signal instructs the container-handling robotic vehicle 122 to lower the gripping device 308 for engaging the first container 531. The control signal is sent in a similar manner to that described for step S120, but for collecting a container from the port 504, rather than delivering a container to the port 504.

In examples in which the gripping device 308 has been partially retracted, the container lift 524 lowers the gripping device 308 onto the first container 531 from this partially retracted position. It is the same container-handling robotic vehicle 122 that delivered the third container 533 to the port 504 as that which collects the first container 531 from the port 504 for delivery to the storage area 100 in the grid. That is, the container-handling robotic vehicle 122 waits at the port 504 with the gripping device 308 lowered into the shaft 522 while steps S255 and S260 take place. This is advantageous in saving time in raising and lowering the gripping device 308, thereby providing improved storage and retrieval throughput at the port 504.

Alternatively, when the gripping device 308 is fully retracted up the shaft 522 by the container lift 524 after delivering the third container 533, the container lift 524 lowers the gripping device 308 down the shaft 522 and onto the first container 531. In this case, it can be the same container-handling robotic vehicle 122 that delivered the third container 533 to the port 504, or a different container-handling robotic vehicle that has been instructed to traverse the grid to the port 504 for collection of the first container 531.

When the gripping device 308 meets the first container 531, the gripping device 308 engages the first container 531. The container lift 524 then lifts the first container 531 up the shaft 522.

This is depicted in Fig. 9J.

The container-handling robotic vehicle 122 is then controlled to deliver the first container 531 to a storage location in the grid 100.

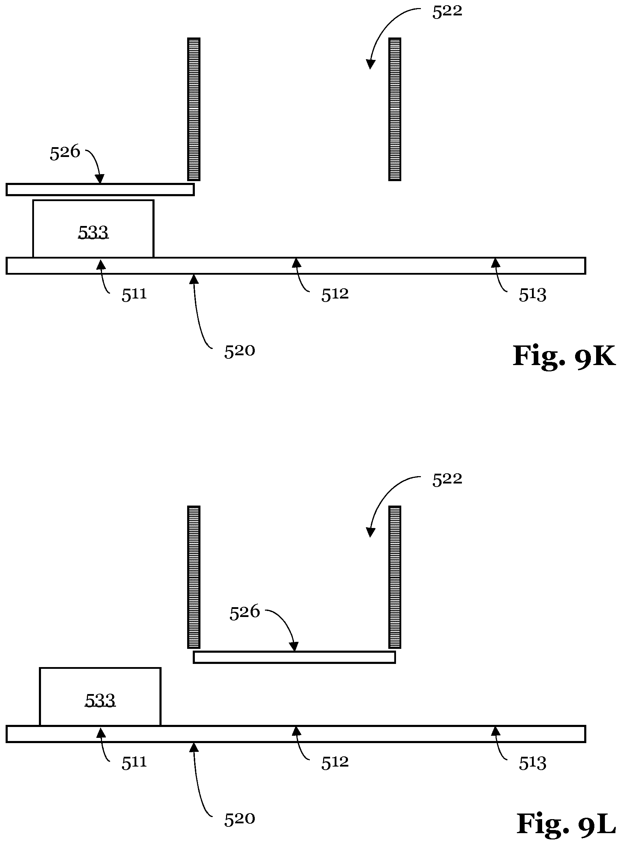

When the first container 531 has been lifted from the port 504 by the container lift 524, the port 504 is in the same state as step S100, but with the third container 533 replacing the first container 531. This is depicted in Fig. 9K. The third container 533 is in the first position 511. The hatch 526 is closed.

The process then proceeds to step S270.

At step S270, the hatch 526 is opened for one or more objects to be inserted or removed to/from the third container 533. That is, the hatch 526 moves from the closed state to the open state so that the third container 533 in the first position 511 is accessible.

This is depicted in Fig. 9L.

The hatch 526 can be opened automatically by the controller 502, or manually opened by an operator, and unlocked automatically by the controller 502, when the third container 533 is in the first position 511.

When the hatch 526 is open, the operator is able to insert/remove one or more objects to/from the third container 533.

The one or more objects are inserted to / removed from the third container 533 by a robotic item picking device, or by a human operator.

Step S270 corresponds to step S105, but with the third container 533 replacing the first container 531.

In other words, when the container recovery process is complete, after step S265, the process loops to back to step S100 but with the third container 533 replacing the first container 531. The process can then repeat through the loop of Fig. 6 for subsequent operations in inserting/removing items to/from subsequent containers, and can enter the error recovery process of Figs. 8A-8C when one of these subsequent containers cannot be lifted by the container lift 524 at step S135, before looping back to step S100 again when the error is recovered.

In the error recovery process of Figs. 8A-8C, during the error recovery, item(s) are able to be inserted/removed from the second container 532, the second container 532 is returned to the storage area 100 in the grid, a third container 533 is delivered to the port 504 and moved to the first position 511 for the insertion/removal of item(s). This takes place alongside the stuck first container 531 being remedied. That is, the delivery and collection of containers to/from the port 504 is not interrupted during the error recovery for the first container 531. Storage and retrieval throughput therefore continues while the error with the first container 531 is being remedied. In this way, port errors are remedied with negated impact on storage and retrieval efficiency.

In a modification to the error recovery process of Figs. 8A-8C, at step S265, the gripping device 308 may again fail to correctly engage the first container 531, such that the first container 531 is still stuck in the port 504. In this case, the process loops back to step S200 from step S265. The steps pertaining to the second container 532 are performed on the third container 533. A fourth container is delivered at step S250, and the steps pertaining to the third container 533 are performed for the fourth container. This looping from S265 to S200 and through to S265 can be repeated as many times as necessary, with the other containers (i.e., containers other than the first container 531) being collected at step S225 and delivered at step S250, until the first container 531 is successfully engaged and lifted at step S265. The process then continues to step S270.

In another modification to the error recovery process of Figs. 8A-8C, at step S225, the gripping device 308 may fail to correctly engage the second container 532. In such a case, both the second container 532 and the first container 531 are stuck in a way that neither can be lifted by the gripping device 308. The controller 502 determines that the second container 532 cannot be lifted by the container lift 524 in the same manner as described for the first container 531 at step S100. The gripping device 308 may not be able to engage the second container 532 for at least the same reasons as those described earlier. When the controller 502 determines that the second container 532 cannot be lifted by the container lift 524, the controller 502 controls the conveyer 520 to move the second container 532 from the second position 512 to the first position 511 for reconfiguration of the second container 532. In examples in which the conveyer 520 moves the containers in unison, the first container 531 would be moved from the third position 513 to the second position 512 in this step.

The controller 502 then controls the conveyer 520 to move the second container 532 from the first position 511 to the second position 512 when the second container 532 has been reconfigured. In examples in which the conveyer 520 moves the containers in unison, the first container 531 would be moved from the second position 512 back to the third position 513 in this step.

The second container 532 can be reconfigured in at least the same manners as those described earlier for the reconfiguring of the first container 531.

When the reconfigured second container 532 is in the second position 512, the controller 502 reinitiates delivery of the second container 532 to the storage area 100 by the container lift 524.

If the controller 502 determines that the second container 532 still cannot be engaged by the gripping device 308, the controller 502 controls the conveyer 520 to again move the second container 532 to the first position 511, so that the second container 532 can be reconfigured again. The controller 502 then controls the conveyer 520 to again move the reconfigured second container 532 to the second position 512, and again initiates delivery of the second container 532 to the storage area 100 by the container lift 524. This repeats until the second container 532 is successfully engaged by the gripping device 308 and lifted by the container lift 524.

When the second container 532 is successfully engaged by the gripping device 308 and lifted by the container lift 524, the process continues to step S230.

While the foregoing examples include a hatch 526, alternatives do not include a hatch 526. The same teaching applies with regard to the control of the operation of the port 504, albeit without the hatch 526 opening and closing steps.

While the foregoing examples use an open-topped container, alternatives use a container with a lid that is removable from the container for the insertion/removal of items. In such cases, the error that prevents the gripping device 308 from engaging the container can also comprise the lid not being correctly or fully attached to the container.

While the foregoing examples describe the container lift 524 as being a component of the container-handling robotic vehicle, alternatives can include using a fixed container lift 524 that is not a component of the container-handling robotic vehicle. In such cases, the container-handling robotic vehicle 122 delivers/retrieves containers to/from such a container lift 524 that is arranged in/above the shaft 522.

Whilst the foregoing examples describe the error recovery process (Figs. 8A-8C) with the second container 532 in the first position 511 at step S200, in alternatives the first container 531 may be the only container in the port. In this case, steps S205 to S225 are bypassed, and at step S235 the controller 502 controls the conveyer 520 to move the first container 531 from the second position 512 to the first position 511. Alternatively/additionally, when no third container is to be delivered, steps S245 to S260 can be bypassed and the controller 502 controls the conveyer to move the first container 531 from the first position 512 to the second position 512 for step S265.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A controller configured to control movement of containers at a port of an automated storage and retrieval system, the port configured for accessing containers in the automated storage and retrieval system, the port comprising a first position, a second position, and a third position for containers, wherein:
the first position is a position in which a container is accessible by an operator for the insertion and/or removal of objects into/from the container;
the second position is below a shaft through which containers are delivered from a storage area in the automated storage and retrieval system to the port, and/or delivered from the port to the storage area, by a container lift; and
the third position is a position in which a container is temporarily stowed;
wherein the port further comprises a conveyer configured to move containers between the first position, the second position and the third position; and
wherein the controller is configured perform steps comprising:
determining a first container in the second position cannot be lifted by the container lift, and a second container is in the first position;
controlling the conveyer to move the first container from the second position to the third position;
controlling the conveyer to move the second container from the first position to the second position;
controlling the conveyer to move the first container from the third position to the first position for reconfiguration of the first container;
controlling the conveyer to move the first container from the first position to the second position when the first container has been reconfigured; and
initiating delivery of the first container from the port to the storage area by the container lift when the first container is reconfigured and in the second position.

2. The controller of claim 1, wherein the controller is configured to perform a step of:
initiating delivery of the second container to the storage area by the container lift when the second container is in the second position; and
the controller is configured to control the conveyer to move the first container from the third position to the first position when the second container has been lifted from the second position by the container lift.

3. The controller of claim 2, wherein when the second container in the second position cannot be lifted by the container lift, the controller is configured to perform steps comprising:
controlling the conveyer to move the second container from the second position to the first position for reconfiguration of the second container;
controlling the conveyer to move the second container from the first position to the second position when the second container has been reconfigured;
reinitiating delivery of the second container to the storage area by the container lift when the second container is reconfigured and in the second position.

4. The controller of any preceding claim, wherein the controller is configured to control the conveyer to move to the second container from the first position to the second position in response to a determination that an operation at the second container is complete, the operation comprising the insertion and/or removal of one or more objects into/from the second container.

5. The controller of any preceding claim, wherein the step of controlling the conveyer to move the first container from the first position to the second position when the first container has been reconfigured comprises:
controlling the conveyer to move the first container from the first position to the third position;
initiating the delivery of a third container to the port by the container lift when the first container is in the third position, wherein the third container is received in the second position;
controlling the conveyer to move the third container from the second position to the first position; and
controlling the conveyer to move the first container from the third position to the second position.

6. The controller of any preceding claim, wherein the first container cannot be lifted by the container lift because at least one object in the first container is protruding from a top opening of the first container, and reconfiguring the first container comprises rearranging one or more objects in the first container so that no objects are protruding from the top opening of the first container; and/or
wherein the first container cannot be lifted by the container lift because the first container is misaligned with a gripping device of the container lift, the gripping device configured to engage the first container, and reconfiguring the first container comprises repositioning the first container on the conveyer for alignment with the gripping device; and/or
wherein the first container cannot be lifted by the container lift because the first container is deformed or damaged, and reconfiguring the first container comprises rearranging one or more objects in the first container, or replacing the first container.

7. The controller of any preceding claim, wherein the container lift comprises a gripping device configured to engage a container, and when delivering a to-be-accessed container to the port, wherein the to-be-accessed container is a container that is to be delivered to the port from the storage area, the controller is configured to perform the following steps:
controlling the container lift to lower the to-be-accessed container into the second position by lowering the gripping device engaged with the to-be-accessed container;
controlling the container lift to release the to-be-accessed container from the gripping device;
controlling the container lift to hold the gripping device in a lowered state wherein the gripping device is proximal to the second position while the to-be-accessed container is moved from the second position by the conveyer and a to-be-stored container is moved to the second position by the conveyer;
controlling the container lift to engage the to-be-stored container with the gripping device, wherein the to-be-stored container is a container that is to be delivered to the storage area from the port; and
controlling the container lift to lift the to-be-stored container from the second position by raising the gripping device.

8. The controller of any preceding claim, wherein the first position, second position and third position are arranged in a line.

9. The controller of any preceding claim, wherein the second position is located between the first position and the third position.

10. The controller of any preceding claim, wherein the conveyer comprises a conveyer belt.

11. The controller of any preceding claim, wherein the conveyer is configured to move each container on the conveyer in unison.

12. A port of an automated storage and retrieval system, the port configured for accessing containers in the automated storage and retrieval system, the port comprising a first position, a second position, and a third position for containers, wherein:
the first position is a position in which a container is accessible by an operator for the insertion and/or removal of objects into/from the container;
the second position is below a shaft through which containers are delivered from a storage area in the automated storage and retrieval system to the port, and/or delivered from the port to the storage area, by a container lift; and
the third position is a position in which a container is temporarily stowed;
wherein the port further comprises a conveyer configured to move containers between the first position, the second position and the third position; and
wherein the port is configured to be controlled by the controller of any preceding claim.

13. An automated storage and retrieval system comprising the controller of any one of claims 1 to 11, or the port of claim 12.

14. A method of controlling movement of containers at a port of an automated storage and retrieval system, the port configured for accessing containers in the automated storage and retrieval system, the port comprising a first position, a second position, and a third position for containers, wherein:
the first position is a position in which a container is accessible by an operator for the insertion and/or removal of objects into/from the container;
the second position is below a shaft through which containers are delivered from a storage area in the automated storage and retrieval system to the port, and/or delivered from the port to the storage area, by a container lift; and
the third position is a position in which a container is temporarily stowed;
wherein the port further comprises a conveyer configured to move containers between the first position, the second position and the third position; and
the method comprises:
determining a first container in the second position cannot be lifted by the container lift, and a second container is in the first position;
controlling the conveyer to move the first container from the second position to the third position;
controlling the conveyer to move the second container from the first position to the second position;
controlling the conveyer to move the first container from the third position to the first position for reconfiguration of the first container;
controlling the conveyer to move the first container from the first position to the second position when the first container has been reconfigured; and
initiating delivery of the first container from the port to the storage area by the container lift when the first container is reconfigured and in the second position.

15. A computer-readable medium storing instructions that, when executed by one or more processors, control movement of containers at a port of an automated storage and retrieval system, the port configured for accessing containers in the automated storage and retrieval system, the port comprising a first position, a second position, and a third position for containers, wherein:
the first position is a position in which a container is accessible by an operator for the insertion and/or removal of objects into/from the container;
the second position is below a shaft through which containers are delivered from a storage area in the automated storage and retrieval system to the port, and/or delivered from the port to the storage area, by a container lift; and
the third position is a position in which a container is temporarily stowed;
wherein the port further comprises a conveyer configured to move containers between the first position, the second position and the third position; and
wherein the instructions comprise:
determining a first container in the second position cannot be lifted by the container lift, and a second container is in the first position;
controlling the conveyer to move the first container from the second position to the third position;
controlling the conveyer to move the second container from the first position to the second position;
controlling the conveyer to move the first container from the third position to the first position for reconfiguration of the first container;
controlling the conveyer to move the first container from the first position to the second position when the first container has been reconfigured; and
initiating delivery of the first container from the port to the storage area by the container lift when the first container is reconfigured and in the second position.
